# EUROPEAN PATENT APPLICATION

(11) **EP 4 598 140 A1**
(43) Date of publication of application: **06.08.2025**
(21) Application number: 23886073.8
(22) Date of filing: 17.10.2023
(51) Int. Cl.: H04W 48/18, H04W 40/20, H04W 48/02, H04W 60/04, H04W 8/02, H04W 28/08, H04W 76/16

(54) **METHOD AND DEVICE FOR PROVIDING ACCESS PATH IN WIRELESS COMMUNICATION SYSTEM**

(30) Priority: 01.11.2022 KR 20220143657
(71) Applicant: Samsung Electronics Co., Ltd., Suwon-si, Gyeonggi-do 16677 (KR)
(72) Inventor: KIM, Dongyeon, Suwon-si, Gyeonggi-do 16677 (KR); SUH, Dongeun, Suwon-si, Gyeonggi-do 16677 (KR)
(74) Representative: Nederlandsch Octrooibureau
(86) International application number: PCT/KR2023/016016
(87) International publication number: WO 2024/096376

(57) **Abstract**

The present disclosure relates to a 5G or 6G communication system for supporting a higher data transmission rate. The present disclosure provides a device and a method for providing an access path in a wireless communication system.

## Description

### [Technical Field]

The disclosure relates to a device and method for providing an access path in a wireless communication system or a mobile communication system and, more particularly, to a method and device for providing access traffic steering functionality (Access Traffic Steering, Switching, Splitting (ATSSS)) in a wireless communication system.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

In a 5G system, when a terminal uses a PDU session, only one access path may be established per access network type (3GPP access, Non-3GPP access) between the terminal and the 5G core network. In addition, a single terminal can have only one registration management state and one connection management state per access network type in the 5G core network. Therefore, when a terminal is using a multi-access protocol data unit session (MA PDU Session) over multiple access paths and needs to switch from one access path to another access path, a new access path may not be added without deregistration and session release for the access path to be switched.

Therefore, the disclosure proposes a method and device for enabling access path switching in a 5G system when a terminal is using a session over multiple access paths, without requiring the terminal deregistration and session release.

### [Technical Solution]

In order to solve the problems above, a method performed by an access and mobility management function (AMF) in a mobile communication system according to an embodiment of the disclosure may include receiving, from a terminal via a second access network (AN), a registration request message using non-3rd generation partnership project (N3GPP) access, the registration request message including information on a multi-access (MA) protocol data unit (PDU) session configured based on a 3rd generation partnership project (3GPP) access via a radio access network (RAN) and the N3GPP access via a first AN, and information on an N3GPP path switching of the MA PDU session, determining whether an AMF reallocation for the N3GPP path switching is necessary based on the registration request message, in case that the AMF reallocation is necessary, identifying a target AMF using the information on the N3GPP path switching, and in case that the target AMF is identified, routing the registration request message to the identified target AMF.

In addition, a method performed by a terminal in a mobile communication system according to an embodiment of the disclosure may include: transmitting, to an access and mobility management function (AMF) via a second access network (AN), a registration request message using a non-3rd generation partnership project (N3GPP) access, the registration request message including information on a multi-access (MA) protocol data unit (PDU) session configured based on a 3rd generation partnership project (3GPP) access via a radio access network (RAN) and the N3GPP access via a first AN, and information on an N3GPP path switching of the MA PDU session, and receiving a registration request approval message or a registration request reject message, as a response to the registration request message, wherein the registration request approval message is received from a target AMF, and wherein the target AMF is determined based on the information on the N3GPP path switching included in the registration request message.

In addition, an access and mobility management function (AMF) in a mobile communication system according to an embodiment of the disclosure may include a transceiver; and a controller configured to control the transceiver to receive, from a terminal via a second access network (AN), a registration request message using non-3rd generation partnership project (N3GPP) access , the registration request message including information on a multi-access (MA) protocol data unit (PDU) session configured based on a 3rd generation partnership project (3GPP) access via a radio access network (RAN) and the N3GPP access via a first AN, and information on an N3GPP path switching of the MA PDU session, determine whether an AMF reallocation for the N3GPP path switching is necessary based on the registration request message, in case that the AMF reallocation is necessary, identify a target AMF using the information on the N3GPP path switching, and in case that the target AMF is identified, control the transceiver to route the registration request message to the identified target AMF.

In addition, a terminal in a mobile communication system according to an embodiment of the disclosure may include a transceiver, and a controller configured to control the transceiver to transmit, to an access and mobility management function (AMF) via a second access network (AN), a registration request message using a non-3rd generation partnership project (N3GPP) access, the registration request message including information on a multi-access (MA) protocol data unit (PDU) session configured based on a 3rd generation partnership project (3GPP) access via a radio access network (RAN) and the N3GPP access via a first AN, and information on an N3GPP path switching of the MA PDU session, and control the transceiver to receive a registration request approval message or a registration request reject message, as a response to the registration request message, wherein the registration request approval message is received from a target AMF, wherein the registration reject message is received from the AMF, and wherein the target AMF is determined based on the information on the N3GPP path switching included in the registration request message.

### [Advantageous Effects]

According to the device and method according to the disclosure, when a terminal in a wireless communication system uses a service via using a 5G core network and a multi-access protocol data unit (MA PDU) session, the terminal can change an access path without deregistration or session release.

Advantageous effects obtainable from the disclosure may not be limited to the above - mentioned effects, and other effects which are not mentioned may be clearly understood from the following descriptions by those skilled in the art to which the disclosure pertains.

### [Description of Drawings]

FIG. 1 illustrates a 5G system structure according to the disclosure.
FIG. 2 illustrates a 5G system structure for supporting ATSSS functionality according to the disclosure.
FIG. 3 illustrates an example of a Tracking Area relationship of different access network functions in a wireless communication system according to the disclosure.
FIG. 4 illustrates an example of a terminal registration procedure for access network path switching in a wireless communication system according to the disclosure.
FIG. 5A illustrates an example of a terminal registration procedure for access network path switching in a wireless communication system according to the disclosure.
FIG. 5B illustrates an example of a terminal registration procedure for access network path switching in a wireless communication system according to the disclosure.
FIG. 5C illustrates an example of a terminal registration procedure for access network path switching in a wireless communication system according to the disclosure.
FIG. 5D illustrates an example of a terminal registration procedure for access network path switching in a wireless communication system according to the disclosure.
FIG. 6A illustrates an example of a terminal registration procedure for access network path switching in a wireless communication system according to the disclosure.
FIG. 6B illustrates an example of a terminal registration procedure for access network path switching in a wireless communication system according to the disclosure.
FIG. 6C illustrates an example of a terminal registration procedure for access network path switching in a wireless communication system according to the disclosure.
FIG. 6D illustrates an example of a terminal registration procedure for access network path switching in a wireless communication system according to the disclosure.
FIG. 7A illustrates an example of a terminal registration procedure for access network path switching in a wireless communication system according to the disclosure.
FIG. 7B illustrates an example of a terminal registration procedure for access network path switching in a wireless communication system according to the disclosure.
FIG. 8 is a block diagram schematically illustrating a structure of a UE according to an embodiment of the disclosure.
FIG. 9 is a block diagram schematically illustrating a structure of an AMF according to an embodiment of the disclosure.

### [Mode for Invention]

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB". In addition, the term "terminal" may refer to not only mobile phones, NB-IoT devices, and sensors, but also any other wireless communication devices.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. Of course, examples of the base station and the terminal are not limited to those mentioned above.

In particular, the disclosure may be applied to 3GPP NR (5th generation mobile communication standard). In addition, the disclosure may be applied to intelligent services (e.g., smart homes, smart buildings, smart cities, smart cars or connected cars, healthcare, digital education, retail business, security and safety-related services, etc.) on the basis of 5G communication technology and IoT-related technology. In the disclosure, the term "eNB" may be interchangeably used with the term "gNB" for the sake of descriptive convenience. That is, a base station described as "eNB" may refer to "gNB". In addition, the term "terminal" may refer to not only mobile phones, NB-IoT devices, and sensors, but also any other wireless communication devices.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS, eNode B, or gNode B), and the downlink refers to a radio link via which the base station transmits data or control signals to the UE. The above multiple access scheme separates data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

According to some embodiments, eMBB may aim at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique may be required to be improved. In addition, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC may have requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km²) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC, which is a cellular-based mission-critical wireless communication service, may be used for remote control for robots or machines, industrial automation, unmanned aerial vehicles, remote health care, emergency alert, and the like. Thus, URLLC must provide communication with ultra-low latency and ultra-high reliability. For example, a service supporting URLLC must satisfy an air interface latency of less than 0.5 ms, and may also require a packet error rate of 10⁻⁵ or less. Therefore, for the services supporting URLLC, a 5G system must provide a transmit time interval (TTI) shorter than those of other services, and may also may require a design for assigning a large number of resources in a frequency band in order to secure reliability of a communication link.

The above-described three services considered in the 5G communication system, that is, eMBB, URLLC, and mMTC, may be multiplexed and transmitted in a single system. In this case, different transmission/reception techniques and transmission/reception parameters may be used between services in order to satisfy different requirements of the respective services. However, mMTC, URLLC, and eMBB as described above are merely an example of different types of services, and service types to which the disclosure is applied are not limited to those mentioned above.

In the following description of embodiments of the disclosure, LTE, LTE-A, LTE Pro, or 5G (or NR, next-generation mobile communication) systems will be described by way of example, but the embodiments of the disclosure may be applied to other communication systems having similar backgrounds or channel types. In addition, based on determinations by those skilled in the art, the embodiments of the disclosure may be applied to other communication systems through some modifications without significantly departing from the scope of the disclosure.

The terms which will be described below are terms defined in consideration of the functions in the disclosure, and may be different according to users, intentions of the users, or customs. Therefore, the definitions of the terms should be made based on the contents throughout the specification.

Hereinafter, exemplary embodiments of the disclosure will be described in detail with reference to the accompanying drawings. It should be noted that, in the drawings, the same or like elements are designated by the same or like reference signs as much as possible. Also, it should be noted that the accompanying drawings of the disclosure are provided to assist in understanding the disclosure, and the disclosure is not limited by the shapes or arrangements illustrated in the drawings. In addition, a detailed description of known functions or configurations that may make the subject matter of the disclosure unclear will be omitted. It should be noted that, in the following description, only parts required to understand operations according to various embodiments will be described and a description of the other parts will be omitted so as not to make the subject matter of the disclosure obscure. Furthermore, various embodiments of the disclosure will be described using terms used in some communication standards (e.g., the 3rd generation partnership project (3GPP)), but they are for illustrative purposes only. Various embodiments of the disclosure may be easily applied to other communication systems through modifications.

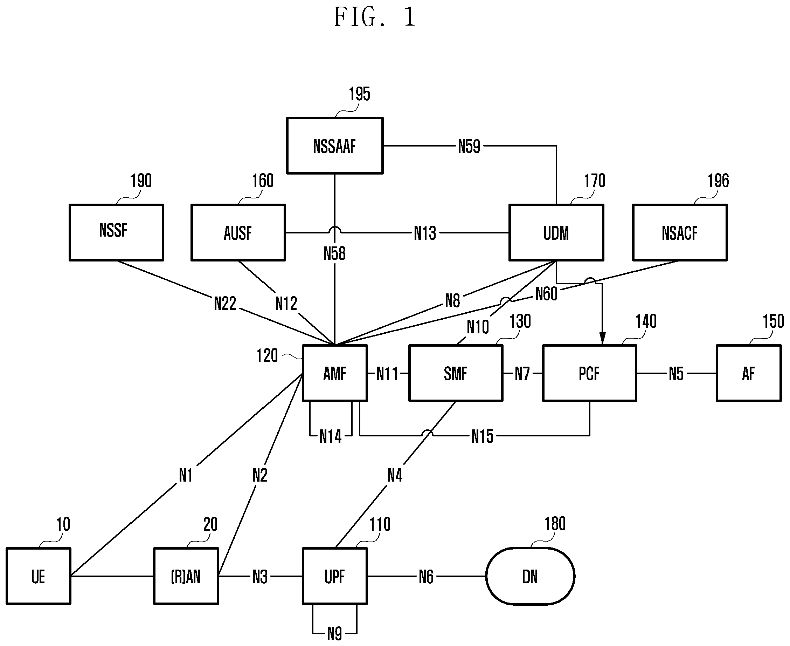

FIG. 1 illustrates the structure of a 5G system according to the disclosure.

Referring to FIG. 1, the structure of the 5G system may include various components (i.e., network functions (NF)). FIG. 1 illustrates some examples of the components, including an authentication server function (AUSF) device 160, an access and mobility management function (AMF) device 120, a session management function (SMF) device 130, a policy control function (PCF) device 140, an application function (AF) device 150, a unified data management (UDM) device 170, a data network (DN) 180, a user plane function (UPF) device 110, a (radio) access network (R)AN) 20, and a terminal, i.e., a user equipment (UE) 10. In addition, FIG. 1 illustrates a network slice selection function (NSSF) device 190, a network slice specific authentication and authorization function (NSSAAF) device 195, and a network slice admission control function (NSACF) device 196.

Each of the devices illustrated in FIG. 1 may be implemented as one server or device and may be implemented as a network slice instance as described above. When each of the devices is implemented as a network slice instance, it may be implemented as two or more identical or different network slice instances within one server or device and as one network slice instance in two or more servers or devices.

Each of the NFs may support the following functions.

The AUSF 160 may process and store data for authentication of the UE 10.

The AMF 120 may provide functions for access and mobility management per UE, and one UE may basically be connected to one AMF. Specifically, the AMF 120 may support functions including signaling between core network (CN) nodes for mobility between 3GPP access networks, termination of a radio access network (RAN) control plane (CP) interface (i.e., N2 interface), termination (N1) of Non-access stratum (NAS) signaling, NAS signaling security (NAS ciphering and integrity protection), access stratum (AS) security control, registration management (registration area management), connection management, idle mode UE reachability (including control and performance of paging retransmission), mobility management control (subscription and policy), intra-system mobility and inter-system mobility support, support for network slicing, SMF selection, lawful intercept (for AMF events and interfaces to the LI system), provision of forwarding of session management (SM) messages between UE and SMF, transparent proxy for routing of SM messages, access authentication, access authorization including roaming permission check, provision of forwarding SMS messages between UE and short message service function (SMSF), security anchor function (SAF), and/or security context management (SCM). Some or all of these functions of the AMF 120 may be supported within a single AMF instance operating as one AMF.

The DN 180 may refer to, for example, an operator service, Internet access, or a 3rd party service. The DN 180 may transmit a downlink protocol data unit (PDU) to the UPF 110 or receive a protocol data unit (PDU) transmitted from the UE 10 via the UPF 110.

The PCF 140 may receive information on packet flow from an application server and provide a function for determining policies such as mobility management and session management. Specifically, the PCF 140 may support functions such as supporting a unified policy framework for controlling network operations, providing policy rules to allow control plane function(s) (e.g., AMF, SMF, etc.) to enforce the policy rules, and implementing a front end for accessing related subscription information for policy determination in a user data repository (UDR).

The SMF 130 may provide a session management function, and when UE has multiple sessions, each session may be managed by a different SMF for each session. Specifically, the SMF 130 may support functions including session management (e.g., session establishment, modification, and termination, including tunnel maintenance between UPF and AN nodes), UE internet protocol (IP) address allocation and management (optionally including authentication), selection and control of user plane (UP) functions, traffic steering configuration for routing traffic from the UPF to appropriate destinations, termination of an interface to policy control functions, enforcement of the control portion of policies and quality of service (QoS), lawful intercept (for SM events and interfaces to a LI system), termination of SM portion of NAS messages, downlink data notification, initiator of AN specific SM information (delivered to AN via N2 via AMF), determination of the session and service continuity (SSC) mode of a session, roaming functions, etc. As described above, some or all of the functions of the SMF 130 may be supported within a single SMF instance operating as a single SMF.

The UDM 170 may store user subscription data, policy data, etc. The UDM 170 may include two parts, namely, an application front end (FE) (not shown) and a user data repository (UDR) (not shown).

The FE may include a UDM FE that is responsible for location management, subscription management, credential processing, etc., and a PCF-FE that is responsible for policy control. The UDM 170 may store data required for functions provided by the UDM-FE and policy profiles required by the PCF. The data stored in the UDR may include policy data and user subscription data including a subscription identifier, security credentials, access and mobility-related subscription data, and session-related subscription data. The UDM-FE may access subscription information stored in the UDR and support functions including authentication credential processing, user identification handling, access authentication, registration/mobility management, subscription management, short message service (SMS) management, and the like.

The UPF 110 may forward a downlink PDU received from the DN 180 to the UE 10 via the (R)AN 20 and may forward an uplink PDU received from the UE 10 via the (R)AN 20 to the DN 180. Specifically, the UPF 110 may support an anchor point for intra/inter radio access technology (RAT) mobility, an external PDU session point for interconnection with a data network, packet routing and forwarding, a user plane portion of packet inspection and policy rule enforcement, lawful intercept, traffic usage reporting, an uplink classifier for supporting routing of traffic flows to the data network, a branching point for supporting multihomed PDU sessions, QoS handling for the user plane (e.g., packet filtering, gating, uplink/downlink rate enforcement), uplink traffic validation (mapping between service data flow (SDF) and QoS flow), transport level packet marking in uplink and downlink, downlink packet buffering, downlink data notification triggering, and the like. Some or all of these functions of the UPF 110 may be supported within a single UFP instance operating as a UPF.

The AF 150 may interoperate with the 3GPP core network to provide services (e.g., support functions such as application impact on traffic routing, access to network capability exposure, and interaction with a policy framework for policy control).

The (R)AN 20 may collectively refer to a new radio access network that supports both evolved E-UTRA, which is an evolved version of 4G radio access technology, and new radio (NR) (e.g., gNB).

The gNB 20 may support functions for radio resource management (i.e., radio bearer control, radio admission control, connection mobility control, dynamic allocation of resources (i.e., scheduling) to the UE 10 in uplink/downlink), internet protocol (IP) header compression, encryption and integrity protection of user data streams, selection of the AMF 120 during attachment of the UE 10 when routing to the AMF 120 is not determined based on information provided to the UE 10, routing of user plane data to the UPF(s) 110, routing of control plane information to the AMF 120, connection setup and termination, scheduling and transmission of paging messages (generated by the AMF 120), scheduling and transmission of system broadcast information (generated by the AMF 120 or operating and maintenance (O&M)), measurement and measurement reporting configuration for mobility and scheduling, transport level packet marking in uplink, session management, support for network slicing, QoS flow management and mapping to data radio bearers, support for the UE 10 in inactive mode, distribution function of NAS messages, NAS node selection function, sharing of radio access networks, dual connectivity, tight interworking between NR and E-UTRA, etc.

The UE 10 may refer to a user equipment. The user equipment may be referred to as a terminal, mobile equipment (ME), mobile station (MS), etc. In addition, the user equipment may be a portable device such as a laptop, a mobile phone, a personal digital assistant (PDA), a smartphone, a multimedia device, etc., or a Non-portable device such as a personal computer (PC) or a vehicle-mounted device. Hereinafter, the description will be provided with reference to user equipment (UE) or a terminal.

For clarity of explanation, a network exposure function (NEF) device and an NF repository function (NRF) device are not illustrated in FIG. 1. However, NFs may interact with the NEF and NRF as needed.

Although not shown in FIG. 1, the NRF may support service discovery functionality. For example, when the NRF receives a 2NF discovery request from a 1NF instance, the NRF may perform a 2NF discovery operation and then provide information on the discovered 2NF instance to the 1NF instance. In addition, the NRF may maintain available NF instances and the services supported thereby.

Meanwhile, for convenience of explanation, FIG. 1 illustrates a reference model for a case where the UE 10 accesses one DN 180 by using one PDU session. However, the disclosure is not limited thereto.

The UE 10 may access two (i.e., local and central) data networks simultaneously by using multiple PDU sessions. At this time, two SMFs may be selected for different PDU sessions. However, each SMF may have the ability to control both the local UPF and the central UPF within the PDU session.

In addition, the UE 10 may also access two (i.e., local and central) data networks simultaneously provided within a single PDU session.

In 3GPP systems, conceptual links connecting NFs in the 5G system are defined as reference points. In the following, examples of reference points included in the 5G system architecture described in FIG. 1 are provided below.
- N1: a reference point between a UE and an AMF
- N2: a reference point between an (R)AN and an AMF
- N3: a reference point between an (R)AN and a UPF
- N4: a reference point between an SMF and a UPF
- N5: a reference point between a PCF and an AF
- N6: a reference point between a UPF and a data network
- N7: a reference point between an SMF and a PCF
- N8: a reference point between a UDM and an AMF
- N9: a reference point between two core UPFs
- N10: a reference point between a UDM and an SMF
- N11: a reference point between an AMF and an SMF
- N12: a reference point between an AMF and an AUSF
- N13: a reference point between a UDM and an authentication server function (AUSF)
- N14: a reference point between two AMFs
- N15: a reference point between a PCF and an AMF for a non-roaming scenario, and a reference point between a PCF and an AMF in a visited network for a roaming scenario

In the following description, the term terminal may refer to the UE 10, and the terms UE and terminal may be used interchangeably. In this case, unless the term terminal is specifically defined additionally, it should be understood as the UE 10.

A UE may establish a session by connecting to a data network (e.g., a network providing Internet service) via a 5G system and may distinguish each data network by using an identifier called a data network name (DNN). The DNN may be used to determine an NF related to a user plane, an interface between NFs, an operator policy, etc. when the UE connects a session to a network system. The DNN may be used, for example, to select an SMF and UPF(s) for a PDU session, and to select an interface (e.g., N6 interface)(s) between a data network and a UPF for a PDU session. In addition, the DNN may be used to determine a mobile communication operator's policy to be applied to a PDU session.

The ATSSS functionality is functionality that transmits data traffic via one or more accesses by utilizing both the 3GPP access and/or the Non-3GPP access described between the UE and the 5G core network. As a representative example, when the 5G core network determines that the user-plane resources between the UE and the data network (DN) 180 are insufficient or that the resource management capacity of the network is overloaded, the ATSSS functionality corresponds to a case where the data traffic is transmitted in a distributed manner by activating both the 5G access and the Wi-Fi access instead of transmitting the data traffic via only one of the 5G access and the Wi-Fi access.

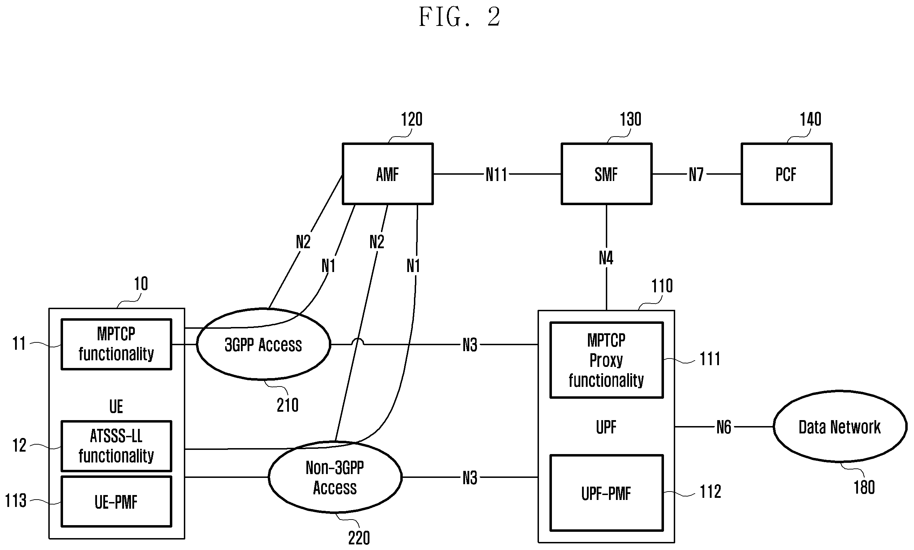

FIG. 2 illustrates an exemplary ATSSS (Access Traffic Steering, Switching, Splitting) support structure in a 3GPP 5G system according to the disclosure.

Referring to FIG. 2, the UE 10 may access a mobile communication network, for example, a 3GPP access network 210, and a network other than a mobile communication network, for example, a Non-3GPP access network 220. The ATSSS functionality may include steering functionality and a steering mode.

The steering functionality may determine a transport protocol between a UPF of a transmitting device and a UPF of a receiving device. The steering functionality may be determined based on the transport layer where the steering, switching, and splitting of traffic are determined. For example, when the MPTCP (Multi path TCP) (IETF RFC 8684) protocol located at a layer upper than the IP layer is used, the steering functionality may correspond to "MPTCP functionality," and when it is determined at a layer lower than the IP layer, the steering functionality may correspond to "ATSSS-LL (ATSSS-lower layer) functionality." The UE may include MPTCP functionality 11 and ATSSS-LL functionality 12.

The UE 10 and the network supporting MPTCP functionality may communicate with MPTCP proxy functionality 111 separately configured in the UPF 110. The MPTCP functionality 111 may only control TCP traffic supporting the MPTCP protocol. When ATSSS-LL functionality is supported, a separate proxy component may not be included in the UPF, and all types of TCP traffic may be controlled.

The steering mode defines a method for steering, switching, and splitting data traffic.

In addition, the UPF 110, the SMF 130, and the PCF 140 according to the disclosure may perform separate control operations for the connection of the UE 10. The control operation above will be described later with reference to the drawing.

The UPF 110 according to the disclosure may include an MPTCP proxy functionality 111 as illustrated in the drawing.

The performance measurement function (PMF) is a function that measures the network environment between UE 10 and the UPF 110, and may measure the round trip time (RTT) required for uplink and downlink, whether 3GPP access and Non-3GPP access are currently activated, etc. Based on the information provided by the PMF, the core network may determine the available steering functionality and steering mode, and this has an overall effect on parameter determination for N3 and N4 connections. The PMF may be included in the UPF 110 and the UE 10, respectively. The PMF included in the UPF may be referred to as UPF-PMF 112, and the PMF included in the UE may be referred to as UE-PMF 113.

By utilizing the ATSSS functionality described in FIG. 2, the traffic transmission via multiple paths between the protocol data unit or packet data unit (PDU) session anchor user plane function (UPF) 110 and the user equipment (UE) 10 is possible as in FIG. 1.

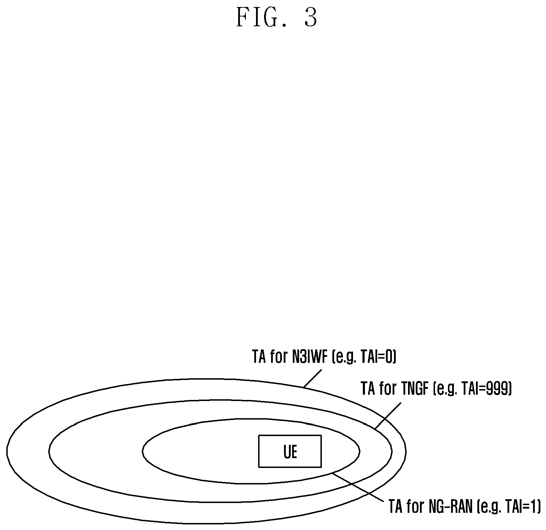

FIG. 3 illustrates an example of a tracking area relationship of different access network functions in a wireless communication system according to the disclosure.

When a UE is at an arbitrary location, the tracking area including the location and the value of the tracking area identifier (TAI) may vary according to the access network function. For example, as illustrated in FIG. 3, when the UE is at a certain location X, in NG-RAN, a TA having a TAI value of 1 may include the location X, in a Non-3GPP interworking function (N3IWF), a TA having a TAI value of 0 may include the location X, and in a trusted network gateway function (TNGF), a TA having a TAI value of 999 may include the location X.

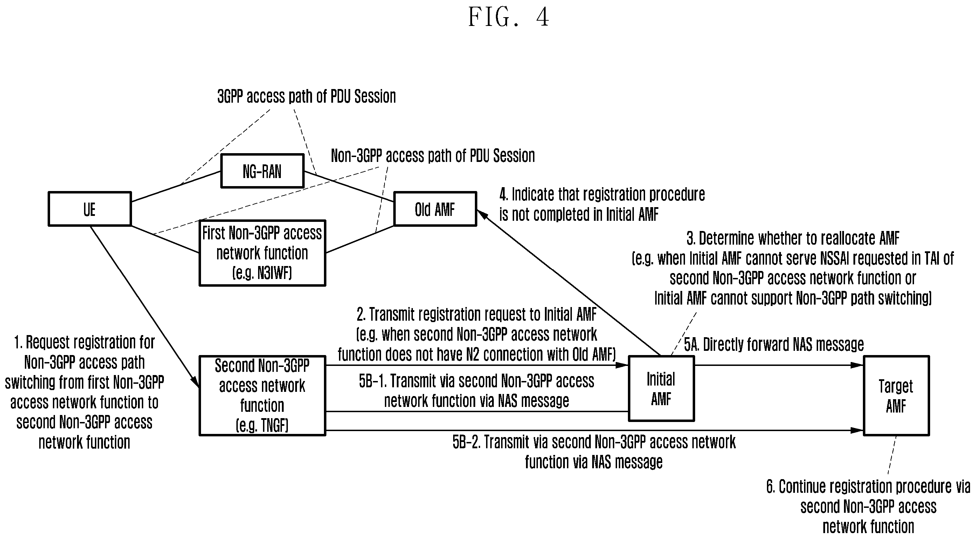

Hereinafter, FIGS. 4 to 7B illustrate a procedure in which a UE using an MA PDU session by using a 3GPP access path via NG-RAN and/or a Non-3GPP access path via an access network (a first Non-3GPP access network) supporting a Non-3GPP access type switches to a Non-3GPP access path via another access network (a second Non-3GPP access network) supporting the Non-3GPP access type. FIGS. 4 to 7B illustrate on the assumption that the first Non-3GPP access network is N3IWF and the second Non-3GPP access network is TNGF for convenience, but the disclosure is not limited thereto. For example, it is obvious to those skilled in the art that methods identical to/similar to the procedures illustrated in FIGS. 4 to 7B may be applied to a procedure for switching the first Non-3GPP access path using the first N3IWF to the second Non-2GPP access path using the second N3IWF, a procedure for switching the first Non-3GPP access path using the first TNGF to the second Non-2GPP access path using the second TNGF, a procedure for switching the first Non-3GPP access path using the first TNGF to the second Non-2GPP access path using the first N3IWF, etc.

FIG. 4 illustrates an example of a UE registration procedure for access network path switching in a wireless communication system according to the disclosure. More specifically, FIG. 4 illustrates an example of a UE registration procedure involving AMF reallocation.

As illustrated in FIG. 2, the UE may utilize a MA PDU session using a 3GPP access path via NG-RAN and a Non-3GPP access path via N3IWF. The UE may determine to switch to a Non-3GPP access path via TNGF when the network environment of the Non-3GPP access path via N3IWF is not good or as another path preferred by the application. FIG. 4 illustrates a procedure in which the UE determines to switch from a Non-3GPP access path via N3IWF to a Non-3GPP access path via TNGF and requests switching to a core network.

In operation 1, the UE may transmit a registration request to the TNGF, requesting that the Non-3GPP access path via N3IWF be switched to the Non-3GPP access path via TNGF. The request may include an indicator requesting the Non-3GPP access path switching.

In operation 2, the TNGF may forward the registration request of the UE in operation 1 to the Initial AMF when the UE does not have a connection using the Old AMF and N2 interface registered via NG-RAN and N3IWF.

In operation 3, the Initial AMF may determine whether reallocation of the AMF is required. For example, the Initial AMF may determine that reallocation of the AMF is required when the network slice used by the MA PDU session for which the UE has requested Non-3GPP access path switching is not supported by the TA of the access network function (e.g., TNGF) to which the UE has transmitted the switching request. As a more specific example, as in FIG. 3, when the UE intends to switch to a connection via TNGF at a location corresponding to TAI=1, which is a TA of NG-RAN, and TAI=0, which is a TA of N3IWF, the Initial AMF may determine in operation 3 whether the network slice of the MA PDU session is supported at TAI=999, which is a TA of TNGF. At this time, the network slice of the MA PDU session may be included in Requested network slice selection assistance information (NSSAI) included in the registration request transmitted by the UE. The Initial AMF may determine that reallocation of the AMF is necessary when all the Single-NSSAI (S-NSSAI) included in the Requested NSSAI are not included in the network slice allowed for the UE, i.e., are not included in the Allowed NSSAI. As another example, the Initial AMF may determine that reallocation of the AMF is necessary when the Initial AMF cannot support the Non-3GPP path switching function. When the Initial AMF is capable to support mobility management and/or connection management of the UE for two or more paths using the same access type (e.g., Non-3GPP access), the Initial AMF may determine that the Non-3GPP path switching function is supported.

In operation 4, the Initial AMF may notify the Old AMF that the registration procedure is not completed in the Initial AMF when the Initial AMF determines that reallocation of the AMF is necessary in operation 3. The Old AMF may continue to maintain information related to the registration of the UE. In operations 1 and 2, the Initial AMF may identify the Old AMF using the 5G-global unique temporary identifier (GUTI) and/or the global unique AMF identifier (GUAMI) included in the Registration Request transmitted by the UE or the access network (AN) parameter transmitted by the TNGF. In addition, the Initial AMF may perform operations 5A or 5B-1 and 5B-2 below when the Initial AMF determines that reallocation of the AMF is necessary in operation 3.

In operation 5A, the Initial AMF may forward the NAS message transmitted by the TNGF in operation 2 when the NAS message is directly transmitted to the reallocated AMF, the Target AMF.

In operation 5B-1, when the Initial AMF may request to the TNGF to forward the NAS message in operation 2 to the Target AMF when the NAS message cannot be directly transmitted to the reallocated AMF, the Target AMF.

In operation 5B-2, the TNGF may forward the NAS message in operation 2 to the Target AMF.

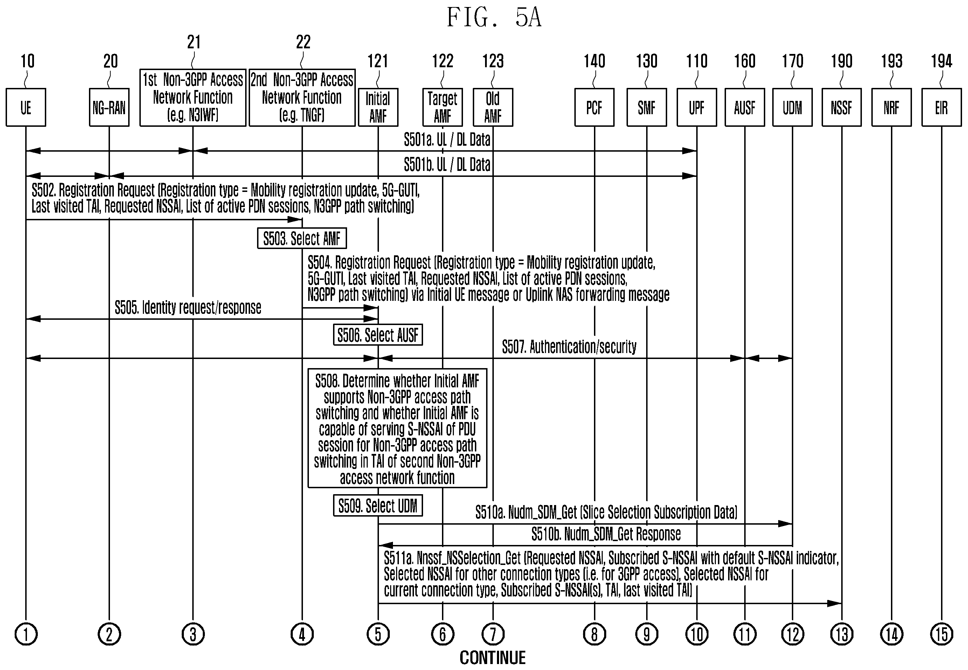

In operation 6, the Target AMF may continue the registration procedure of the UE, based on the registration request message included in the NAS message received in operation 5A or 5B-1 and 5B-2. This procedure may include modification of the MA PDU session for switching the Non-3GPP access path via the N3IWF to the Non-3GPP access path via the TNGF and/or allocation of user plane resources. The specific details are described in FIGS. 5A to 7B.

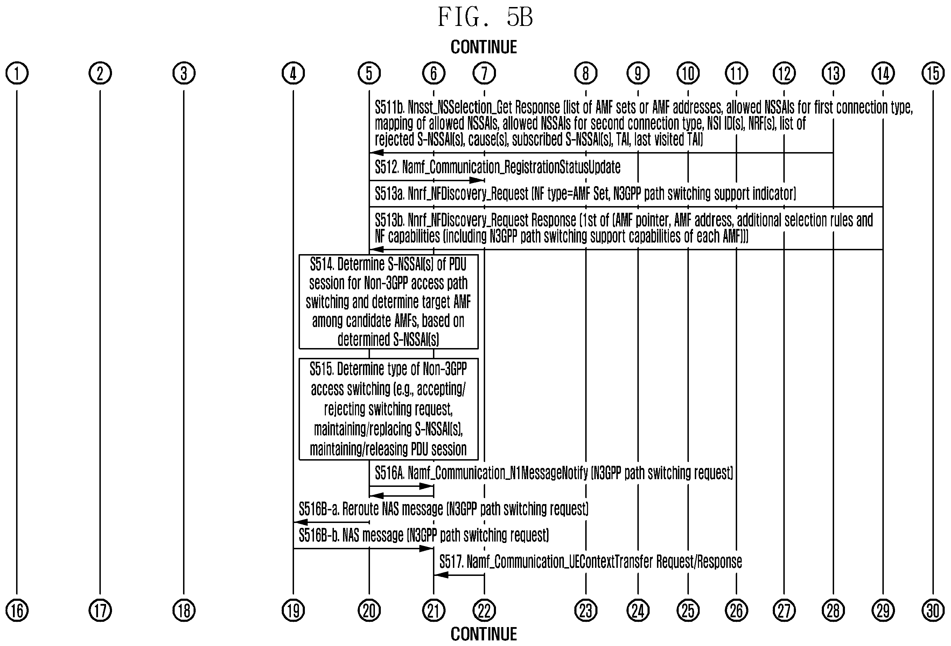

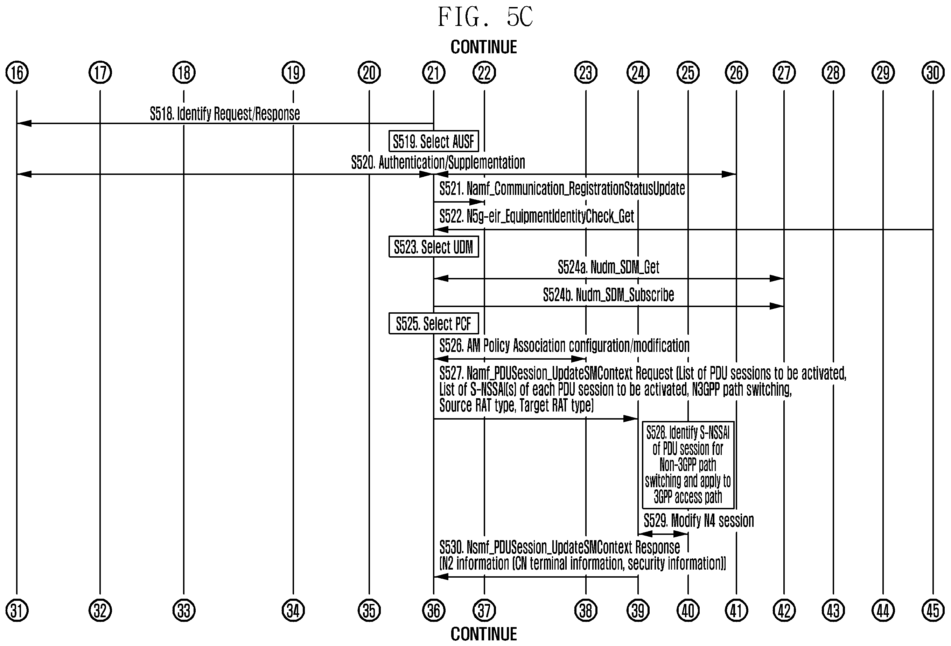

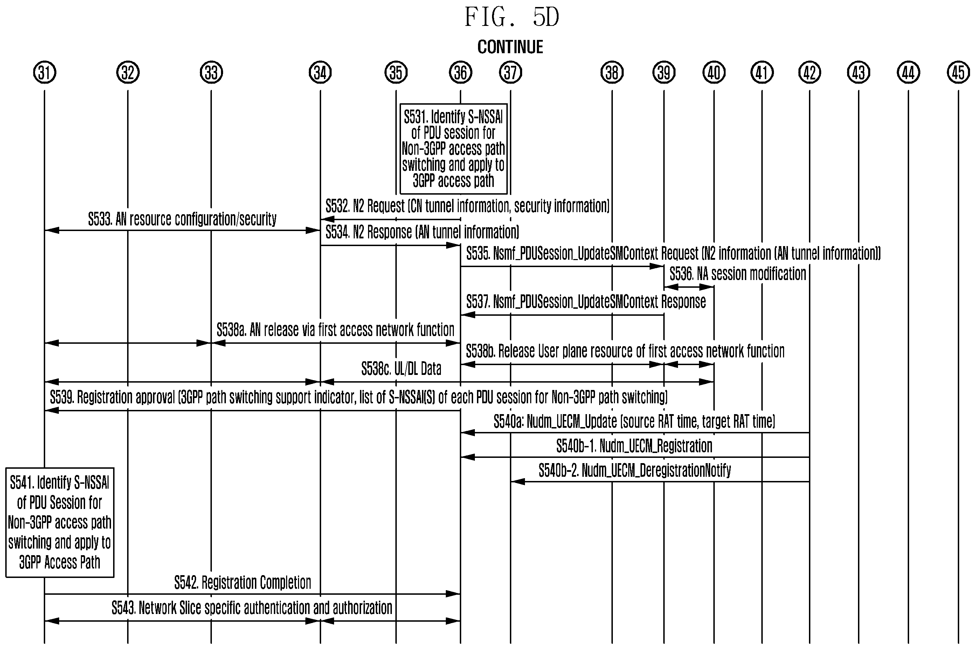

FIG. 5A, FIG. 5B, FIG. 5C, and FIG. 5D illustrate examples of a UE registration procedure for access network path switching in a wireless communication system according to the disclosure.

More specifically, the drawings illustrate examples of a UE registration procedure involving a determination of whether to reallocate an AMF and a determination of whether to change a network slice. The procedures illustrated from FIG. 5A to FIG. 5D may be understood as sequentially performed procedures.

Referring to FIG. 5A, the UE 10 may use MA PDU session by using 3GPP access path via the NG-RAN 20 and Non-3GPP access path via the N3IWF 21. For example, the UE 10 may transmit and receive uplink and downlink data by connecting the UPF 110 and the Non-3GPP access path via the N3IWF 21 (S501a). In addition, the UE 10 may transmit and receive uplink and downlink data by connecting the UPF 110 and the 3GPP access path via the NG-RAN 20 (S501b).

According to an example of the disclosure, the UE 10 may determine to switch to Non-3GPP access path via the TNGF 22 when network environment of Non-3GPP access path via the N3IWF 21 is not good or as another path preferred by application. The UE 10 may transmit a registration request to the TNGF 22 to switch the Non-3GPP access path via the N3IWF 21 to the Non-3GPP access path via the TNGF 22 (S502). The request may include information on at least one of a registration type indicating that the type of the registration request is a mobility registration update, a 5G- GUTI, a last visited TAI, a Requested NSSAI, a List of PDU Sessions To Be Activated, and N3GPP path switching. The 5G-GUTI may include information indicating the AMF (Old AMF) 123 responsible for registration management when the UE 10 uses an MA PDU session. The last visited TAI may include at least one of the identifier of the tracking area (TA) of the N3IWF 21 that the UE 10 last visited and the identifier of the TA of the NG-RAN 20 that the UE 10 last visited. The Requested NSSAI may include the identifier of the network slice used by the MA PDU session for which the UE 10 requests Non-3GPP access path switching. The List of PDU Session To Be Activated may include the PDU Session identifier of the MA PDU session for which the UE 10 requests Non-3GPP access path switching. The N3GPP path switching may be an indicator that the UE 10 requests Non-3GPP access path switching to the network.

The TNGF 22 may select an AMF that may be connected using the N2 interface (S503). The TNGF 22 may select the Initial AMF 121 when there is no connection using the N2 interface and the Old AMF 123, to which the UE 10 is registered via the NG-RAN 20 and the N3IWF 21.

The TNGF 22 may transfer the registration request received from the UE 10 in S502 to the Initial AMF 121 (S504). The registration request message may be transferred to the Initial AMF 121 through Initial UE message or Uplink NAS Transport message. The Initial UE message and Uplink NAS Transport message may be a type of NAS message.

The Initial AMF 121 may transmit an Identity Request message to the UE 10, and in response thereto, the UE 10 may transmit an Identity Response message to the Initial AMF 121 (S505).

The Initial AMF 121 may select the AUSF 160 (S506).

The UE 10, the Initial AMF 121, the AUSF 160, and the UDM 170 may perform authentication and security procedures (S507).

The Initial AMF 121 may determine whether reallocation of AMF is required (S508), as illustrated in operation 3 of FIG. 4. For example, when the Initial AMF 121 receives N3GPP path switching in S504, the Initial AMF 121 may determine whether it supports Non-3GPP access path switching function. In addition, the Initial AMF 121 may identify the network slice information used by the PDU Session (i.e., the MA PDU session for which the UE has requested Non-3GPP access path switching) included in the List Of PDU Session To Be Activated received in S504 by referring to the Requested NSSAI, and then determine whether the corresponding network slice is included in the Allowed NSSAI allowed for the UE. At this time, the Allowed NSSAI may refer to a network slice allowed in the TAI for the Non-3GPP access type and the TNGF.

When subscription information of UE is required to determine whether to reroute the registration request message received in S504 (in other words, whether to perform S516B-a to S516B-b instead of S516A described below) or when slice selection subscription information of UE 10 is not provided from the Old AMF 123, the Initial AMF 121 may select the UDM 170 (S509).

When the Initial AMF 121 determines that reallocation of AMF is necessary in S508, the Initial AMF 121 may acquire slice selection subscription information of UE 10 from the UDM 170. More specifically, the Initial AMF 121 may request Slice Selection Subscription data of UE 10 from the UDM 170 (S510a). In response thereto, the UDM 170 may provide Slice Selection Subscription data of UE 10 to the Initial AMF 121 (S510b).

The Initial AMF 121, when it determines that reallocation of the AMF and reselection of the network slice are necessary in S508, may request the NSSF 190 to reselect the network slice to a suitable network slice when the Non-3GPP access path of the MA PDU session is moved from the N3IWF 21 to the TNGF 22. More specifically, as described in S511a, this request may include at least one of Requested NSSAI, Subscribed S-NSSAI(s) (which may include a default S-NSSAI indication), Allowed NSSAI for the other Access Type (i.e., Allowed NSSAI allowed in 3GPP access), Allowed NSSAI for current access type (i.e., Allowed NSSAI allowed in Non-3GPP access), TAI, and last visited TAI. Referring to FIG. 5B, the NSSF 190 may provide information on the suitable network slice to the Initial AMF 121 when Non-3GPP access path of MA PDU session is moved from the N3IWF 21 to the TNGF 22 (S511b). The NSSF 190 may compare Allowed NSSAI for the other Access Type and/or Allowed NSSAI for current access type among the information received in S511a with Subscribed S-NSSAI(s) to determine a suitable network slice. In addition, the NSSF 190 may refer to TAI and/or last visited TAI among the information received in S511a to determine a suitable network slice. The response provided by the NSSF 190 to the Initial AMF 121 may include at least one of AMF Set or list of AMF addresses, Allowed NSSAI for the first access type, Mapping Of Allowed NSSAI, Allowed NSSAI for the second access type, Mapping of Allowed NSSAI, network slice instance (NSI) ID(s), list of rejected S-NSSAI(s), and cause value(s) therefor. The AMF Set or list of AMF addresses may refer to AMF Set or AMF addresses that may access candidate AMF(s) supporting the selected network slice. The Initial AMF 121 may determine Target AMF 122 from among the received candidate AMF(s). The Allowed NSSAI for the first access type may refer to Allowed NSSAI allowed in Non-3GPP access. The Allowed NSSAI for the second access type may refer to Allowed NSSAI allowed in 3GPP access. The list of (rejected S-NSSAI(s), cause value(s)) may refer to the list of rejected S-NSSAI(s) and the corresponding cause(s) among the S-NSSAI(s) included in the Requested NSSAI, Subscribed S-NSSAI, Allowed NSSAI for the other Access Type, and Allowed NSSAI for the current access type, as received in S511a. The cause value may include information on at least one of not allowed in the current TAI, not allowed in the current access type, not allowed in the other access type, and access path switching not being allowed.

As described in operation 4 of FIG. 4, when the Initial AMF 121 determines that reallocation of the AMF is necessary in S508, the Initial AMF 121 may inform the Old AMF 123 that the registration procedure has not been completed in the Initial AMF 121 (S512).

When the Initial AMF 121, despite not having the address information of the Target AMF 122, intends to directly transmit the registration request message received in S504 to the Target AMF 122, the Initial AMF 121 may request address information of the Target AMF 122 from an NRF. More specifically, the Initial AMF 121 may request address information of the Target AMF 122 from the NRF 193 (S513a). This request may include at least one of NF type indicating a request for address information of the AMF, AMF Set, and N3GPP path switching support indication. The N3GPP path switching support indication may be an indicator that indicates a request for information on whether the NF requesting the address supports the Non-3GPP path switching function as one of the capabilities thereof or an indicator that indicates a request for the address only for an NF that supports the Non-3GPP path switching function. In response thereto, the NRF 193 may provide the address of the Target AMF 122 to the Initial AMF 121 (S513b). This response may include a list of AMF pointer, AMF address, additional selection rules, and NF capabilities. The NF capabilities may include information on whether the Non-3GPP path switching function is supported. The Initial AMF 121 may refer to this capability information when selecting one Target AMF 122 from the received list.

The Initial AMF 121 may finally determine a network slice of MA PDU session and a Target AMF 122, based on the information acquired from the UDM 170, the NSSF 190, and the NRF 193 in S510, S513a, and S513b (S514).

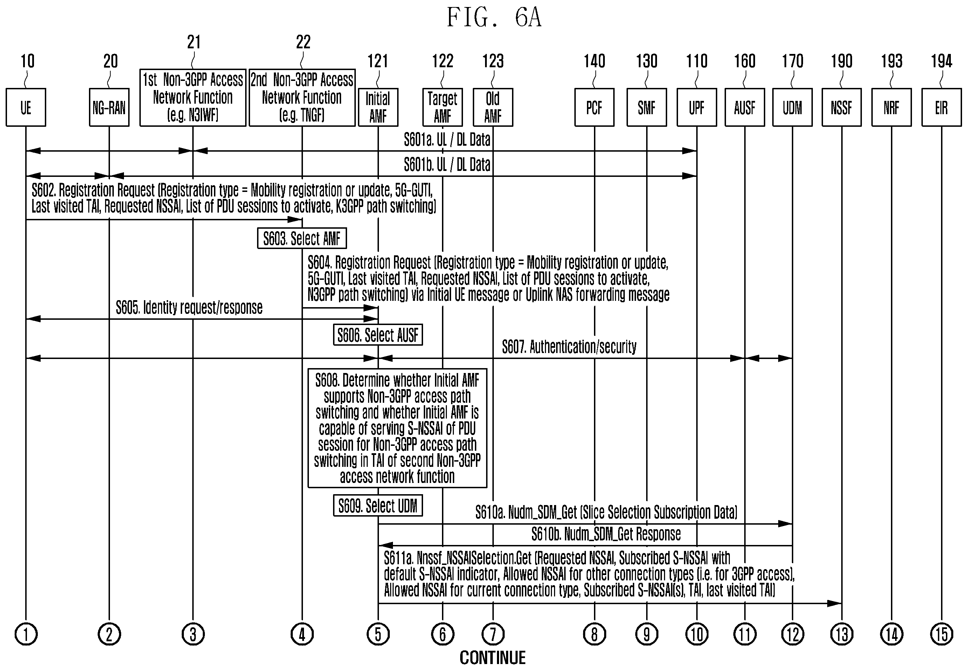

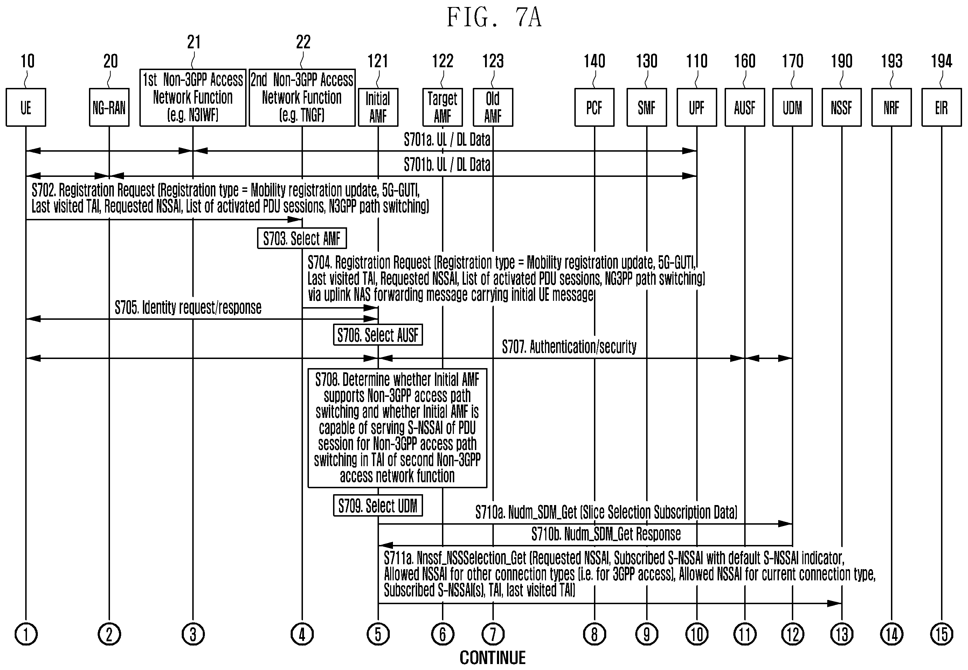

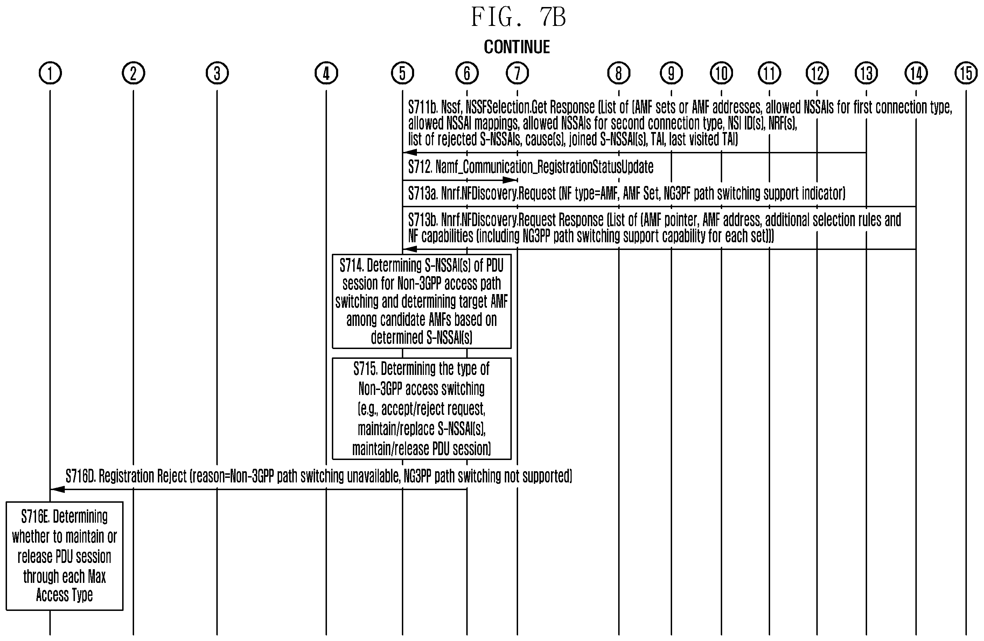

The Initial AMF 121 may determine whether to accept or reject the registration request for Non-3GPP access path switching received in S504, based on the determination in S508 and S514 (S515). For example, the Initial AMF 121 may reject the registration request when the Initial AMF 121 does not support Non-3GPP access path switching function and another AMF supporting a Non-3 GPP access path switching function cannot be specified as the Target AMF. As another example, when the Initial AMF 121 cannot specify a network slice supported in the TAI of the TNGF 22 for the UE 10 and/or as the Target AMF, another AMF that supports the network slice, the Initial AMF 121 may reject the registration request. As another example, when the Initial AMF 121 supports the Non-3GPP access path switching function and is capable of identifying, as the Target AMF, another AMF that supports a network slice supported in the TAI of the TNGF 22 for the UE 10, the Initial AMF 121 may accept the registration request or reject the registration request while providing information that enables the UE 10 to transmit the registration request to the Target AMF. In the following description, a case of accepting a registration request is described, and a method of rejecting a registration request while providing information to the UE is described later with reference to FIGS. 6A to 6D, and a method of rejecting other registration requests is described later with reference to FIGS. 7A and 7B.

When the Initial AMF 121 specifies the Target AMF 122, the Initial AMF 121 may forward the registration request message received in S504 to the Target AMF 122, as described in operations 5A, 5B-1 and 5B-2 of FIG. 4. More specifically, when the Initial AMF 121 is capable of directly transmitting a NAS message to the Target AMF 122, the Initial may forward the NAS message including the registration request message received in S504 to the Target AMF 122 (S516A). At this time, the NAS message may include an indicator (for convenience, N3GPP path switching request) notifying that the cause for forwarding the message is a Non-3GPP path switching request of the UE 10. When the Initial AMF 121 cannot directly transmit a NAS message to the Target AMF 122, which is a reallocated AMF, the Initial AMF 121 may request the TNGF 22 to transmit a NAS message including a registration request message received from the UE 10 in S502 to the Target AMF 122 (S516B-a). At this time, the NAS message may include an indicator (for convenience, N3GPP path switching request) notifying that the cause for transmitting the message is a Non-3GPP path switching request of the UE 10. The TNGF 22 may transmit the NAS message including the registration request message received from the UE 10 in S502 to the Target AMF 122. At this time, the NAS message may include an indicator (for convenience, N3GPP path switching request) notifying that the cause for transmitting the message is a Non-3GPP path switching request of the UE 10 (S516B-b).

The Target AMF 122 may request and receive UE Context information from the Old AMF 123 (S517).

Referring to FIG. 5C, the Target AMF 122 may transmit an Identity Request message to the UE 10, and in response thereto, the UE 10 may transmit an Identity Response message to the Target AMF 122 (S518).

The Target AMF 122 may select the AUSF 160 (S519).

The UE 10, the Target AMF 122, the AUSF 160, and the UDM 170 may perform Authentication and Security procedures (S520).

The Target AMF 122 may notify the Old AMF 123 that registration of the UE 10 in the Target AMF 122 will be completed (S521).

The Target AMF 122 may perform the EIR 194 and a ME identity check procedure (S522).

The Target AMF 122 may select the UDM 170 (S523).

The Target AMF 122 may receive subscription data from the UDM 170 (S524a). The Target AMF 122 may request the UDM 170 to notify when there is a change in subscription data (S524b).

The Target AMF 122 may select the PCF 140 (S525).

The Target AMF 122 may perform the AM Policy Association Establishment or Modification procedures with the PCF 140 (S526).

The Target AMF 122 may request the SMF 130 to change (modification or update) a PDU session (S527). This request may include at least one of a List Of PDU Session To Be Activated, a list of S-NSSAI(s) of each PDU Session which needs to be activated, N3GPP path switching, Source RAT Type, and Target RAT Type. The List Of PDU Session To Be Activated may include a PDU Session ID of a MA PDU session for which the UE 10 has requested Non-3GPP access path switching to the network in S502. The list of S-NSSAI(s) of each PDU Session which needs to be activated may include information on a network slice used by a MA PDU session for which the UE 10 has requested Non-3GPP access path switching to the network in S502, or network slice information determined in S508 to S514. The Source RAT Type may be information indicating a RAT Type (e.g., untrusted Non-3GPP access) provided by N3IWF 21, and the Target RAT Type may be information indicating a RAT Type (e.g., trusted Non-3GPP access) provided by the TNGF 22.

Based on the information received in S527, the SMF 130 may specify the MA PDU Session for which the UE 10 has requested Non-3GPP path switching, and prepare control plane and user plane resource allocation for establishment and addition of the Non-3GPP path via the TNGF 22 (S528). In addition, when the SMF 130 recognizes that the MA PDU Session for which the UE 10 has requested Non-3GPP path switching has a 3GPP access path via the NG-RAN 20, as described in S501b, and that the network slice needs to be changed as a result of confirming the information received in S527, the SMF 130 may update the information related to the UE 10 and session associated with the 3GPP access path to the changed network slice information.

Based on the information received in S527, the SMF 130 may request and/or provide CN Tunnel information and/or security information to the UPF 110 to establish and add a Non-3GPP path via the TNGF 22 of MA PDU Session for which the UE 10 has requested Non-3GPP path switching (S529). The UPF 110 may request and/or provide CN Tunnel information and/or security information to the SMF 130.

The SMF 130 may provide information related to control plane and user plane resources for establishing and adding a Non-3GPP path via the TNGF 22 to the Target AMF 122 (S530). This information may include CN Tunnel Information and/or security information.

Referring to FIG. 5D, when the Target AMF 122 recognizes that the MA PDU Session for which the UE 10 has requested Non-3GPP path switching has a 3GPP access path via the NG-RAN 20, as described in S501b, and that the network slice needs to be changed as a result of identifying the information received in S516A, S516B-a, and S516B-b, the Target AMF 122 may update the information related to the UE 10 and mobility management and registration management associated with the 3GPP access path to the changed network slice information (S531).

The Target AMF 122 may provide the TNGF 22 with information related to control plane and user plane resources for establishing and adding a Non-3GPP path via the TNGF 22 (S532). This information may include CN Tunnel information and/or security information.

The TNGF 22 may perform AN resource setup and/or security procedures with the UE 10 (S533). The TNGF 22 may allocate AN tunnel information.

The TNGF 22 may provide AN Tunnel information to the Target AMF 122 (S534).

The Target AMF 122 may transfer AN Tunnel information to the SMF 130 (S535).

The SMF 130 may transfer AN Tunnel information to the UPF 110 (S536). The UPF may update N3 Tunnel information.

The SMF130 may respond to the Target AMF 122 with the result of transmitting the AN Tunnel information (S537).

The Target AMF 122 may perform a procedure to release Non-3GPP access path via the N3IWF 21. More specifically, the Target AMF 122 may request AN Release to the N3IWF 21 (S538a). The N3IWF 21 may release connection with the UE 10. The Target AMF 122 may request the SMF 130 to release user plane via the N3IWF 21 (S538b). The SMF 130 may request the UPF 110 to release user plane via the N3IWF 21. The UPF 110 may release connection with the N3IWF 21. The UE 10 and the UPF 110 may transmit and receive uplink and downlink data via the TNGF 22 (S538c).

The target AMF 122 may transmit an acceptance of the registration request to the UE 10 (S539). This acceptance message may include at least one of an N3GPP path switching support indication and a list of S-NSSAI(s) of each PDU Session for Non-3GPP access path switching. The N3GPP path switching support indication may be an indicator indicating that the Initial AMF supports the Non-3GPP path switching function. The list of S-NSSAI(s) of each PDU Session for Non-3GPP access path switching may be network slice information provided in the list of S-NSSAI(s) of each PDU Session which needs to be activated, described in S527.

The Target AMF 122 may modify or update the UE connection management information related to the Non-3GPP access with respect to the UDM 170. For example, the Target AMF 120 may modify or update the RAT Type used for the Non-3GPP access in the UE connection management information from untrusted non-3GPP access to trusted non-3GPP access by providing the Source RAT Type and/or the Target RAT Type in S540a. For example, the Target AMF 122 may register the RAT Type used for the Non-3GPP access in the UE connection management information as trusted non-3GPP access in S540b-1. The UDM 170 may notify the Old AMF 123 of the deregistration in S540b-2.

When the UE 10 recognizes that the MA PDU Session for which the UE 10 has requested Non-3GPP path switching has a 3GPP access path via the NG-RAN 20, as described in S501b and that the network slice needs to be changed as a result of identifying the information received in S539, the UE 10 may update the information related to the UE, mobility management and registration management, and session management associated with the 3GPP access path to the changed network slice information (S541).

The UE 10 may transmit a registration completion message to the Target AMF 122 (S542).

The UE 10, the TNGF 22, and the Target AMF 122 may perform a Network Slice-Specific Authentication and Authorization procedure (S543).

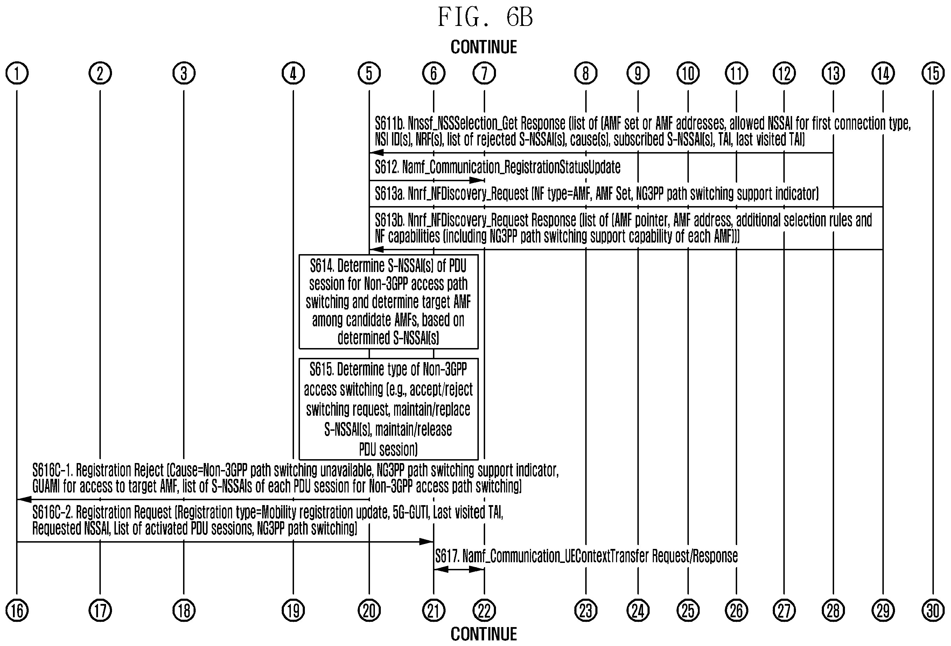

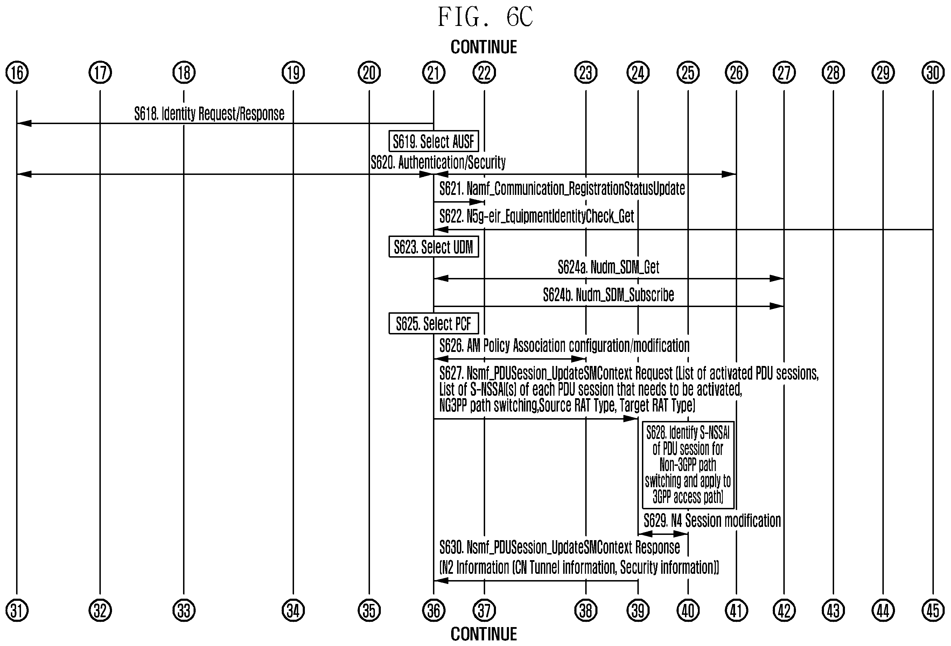

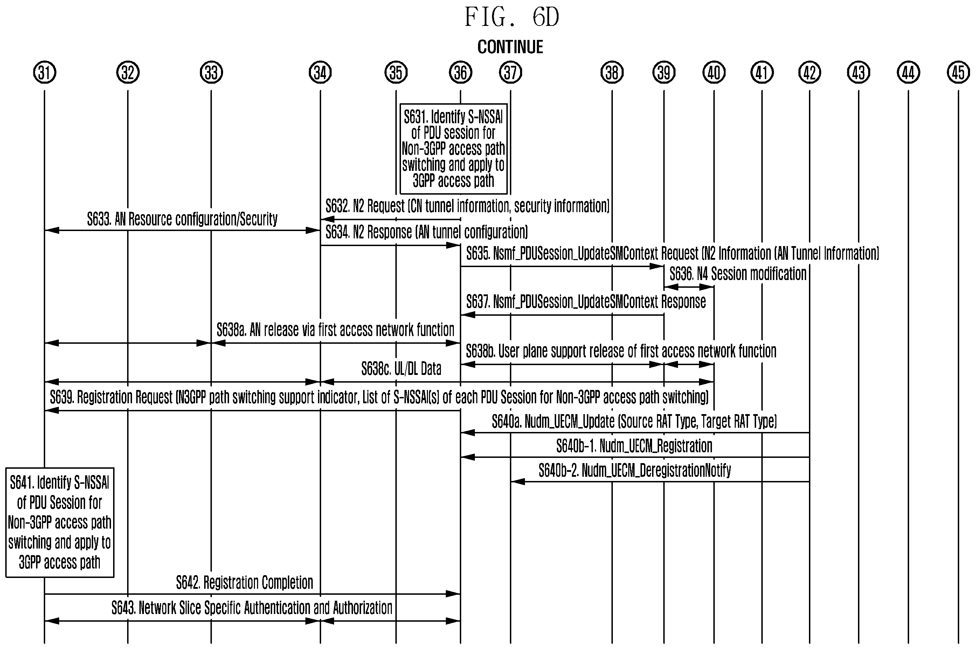

FIGS. 6A, 6B, 6C, and 6D illustrate examples of a UE registration procedure for access network path switching in a wireless communication system according to the disclosure. More specifically, the drawings illustrate examples of a UE registration procedure involving a determination of whether to reallocate an AMF and a determination of whether to change a network slice. The procedures illustrated in FIGS. 6A to 6D may be understood as sequentially performed procedures.

Among the procedures illustrated in FIGS. 6A and 6B, procedures from S601a to S615 correspond to operations corresponding to the procedures described above in FIGS. 5A and 5B, and thus, a redundant description will be omitted herein.

Referring to FIG. 6B, when the Initial AMF 121 supports the Non-3GPP access path switching function, as described in S515 of FIG. 5 and is capable of specifying, as the Target AMF 122, another AMF that supports the network slice supported in the TAI of the TNGF 22 for the UE 10, the Initial AMF 121 may reject the registration request and provide the UE 10 with information to help the UE 10 transmit the registration request to the Target AMF 122. To this end, the Initial AMF 121 may transmit a registration rejection message to the UE 10 (S616C-1). This registration rejection message may include at least one of registration rejection cause information indicating that the Initial AMF 121 cannot directly perform Non-3GPP access path switching, an N3GPP path switching support indication, a GUAMI to access to Target AMF, or a list of S-NSSAI(s) of each PDU Session for Non-3GPP access path switching. The N3GPP path switching support indication may be an indication indicating that the Target AMF 122 supports the Non-3GPP path switching function. The GUAMI to access Target AMF may be AMF identification information that allows the UE 10 to transmit a NAS message (including a registration request message) to the Target AMF 122 determined in S608 to S614. The list of S-NSSAI(s) of each PDU Session for Non-3GPP access path switching may be information on a network slice used by a MA PDU session for which the UE 10 has requested Non-3GPP access path switching to the network in S602, or information on the network slice determined in S608 to S614. The UE 10 may transmit a registration request to the target AMF 122 via the TNGF 22 to request switching of the Non-3GPP access path via the N3IWF 21 to the Non-3GPP access path via the TNGF 21 (S616C-2). The request may include at least one of a registration type indicating that the type of the registration request is mobility registration update, 5G-GUTI, last visited TAI, Requested NSSAI, List Of PDU Sessions To Be Activated, and N3GPP path switching. The 5G-GUTI may include information indicating an AMF (Old AMF) 123 in charge of registration management when the UE uses an MA PDU session. The last visited TAI may include at least one of an identifier of a TA of an N3IWF 21 which last visited by the UE 10 and an identifier of a TA of an NG-RAN 20 which last visited by the UE 10. The Requested NSSAI may include an identifier of a network slice used by an MA PDU session for which the UE 10 requests Non-3GPP access path switching. At this time, the identifier of the network slice may be information corresponding to a list of S-NSSAI(s) of each PDU Session for Non-3GPP access path switching received from S616C-1. The List Of PDU Session To Be Activated may include a PDU Session identifier of an MA PDU session for which the UE requests Non-3GPP access path switching. The N3GPP path switching may be an indicator that the UE 10 requests Non-3GPP access path switching from the network.

The procedures illustrated in S617 to S623 of FIG. 6B and FIG. 6C, and FIG. 6D correspond to operations corresponding to the procedures described above in S517 to S523 of FIG. 5B, FIG. 5C, and FIG. 5D, and thus, redundant descriptions thereof are omitted herein.

FIG. 7A and FIG. 7B illustrate an example of a UE registration procedure for access network path switching in a wireless communication system according to the disclosure. More specifically, the drawings illustrate an example of a UE registration procedure involving a determination of whether to reallocate AMF and a determination of whether to change a network slice. The procedures illustrated in FIG. 7A to FIG. 7B may be understood as sequentially performed procedures.

In FIG. 7A and FIG. 7B, the procedures from S701a to S715 correspond to operations corresponding to the procedures from S501a to S515 of FIG. 5A and FIG. 5B, and thus, redundant descriptions thereof are omitted herein.

Referring to FIG. 7B, the Initial AMF 121 may reject the registration request when the Initial AMF 121 does not support the Non-3GPP access path switching function, as described in S515 of FIG. 5B and another AMF supporting the Non-3GPP access path switching function cannot be specified as the Target AMF 122. As another example, the Initial AMF 121 may reject the registration request when the Initial AMF 121 cannot specify a network slice supported in the TAI of the TNGF 22 for the UE 10 and/or as the Target AMF 122, another AMF supporting the network slice. The Initial AMF 121 may transmit a registration rejection message to the UE 10 (S716D). This message may include at least one of the registration rejection cause information notifying that the Initial AMF 121 cannot directly perform the Non-3 GPP access path switching, or N3GPP path switching not supported. The N3GPP path switching not supported may be an indicator indicating that the network does not support Non-3GPP path switching function.

The UE 10 may determine whether to maintain or release the MA PDU session for each access type (S716E). When determining whether to maintain and/or release the MA PDU session, the UE 10 may refer to the information received from the Initial AMF 121 in the S716D. This information can include at least one of the registration rejection cause information indicating that the Initial AMF 121 cannot directly perform Non-3GPP access path switching, or N3GPP path switching not supported. For example, when the UE 10 receives the registration rejection cause information indicating that the Initial AMF 121 cannot directly perform Non-3GPP access path switching, or N3GPP path switching not supported, the UE 10 may request the AMF to release the PDU session and/or deregister the non-3GPP access path for the non-3GPP access path. This request may mean that the UE 10 maintains the existing MA PDU session using only the 3GPP access path. As another example, when the UE 10 receives the registration rejection cause information indicating that the Initial AMF 121 cannot directly perform Non-3GPP access path switching or N3GPP path switching not supported, the UE 10 may request PDU Session Release and/or Deregistration to the AMF for the 3GPP access path and the non-3GPP access path. This request may mean that the MA PDU session cannot be maintained unless the non-3GPP access path of the UE 10 is switched as requested by the UE 10.

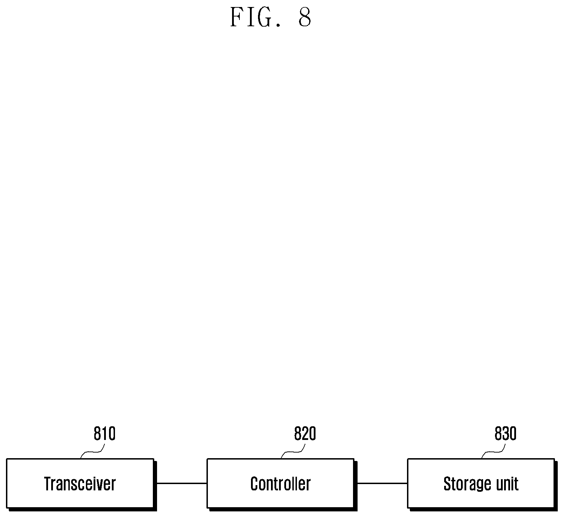

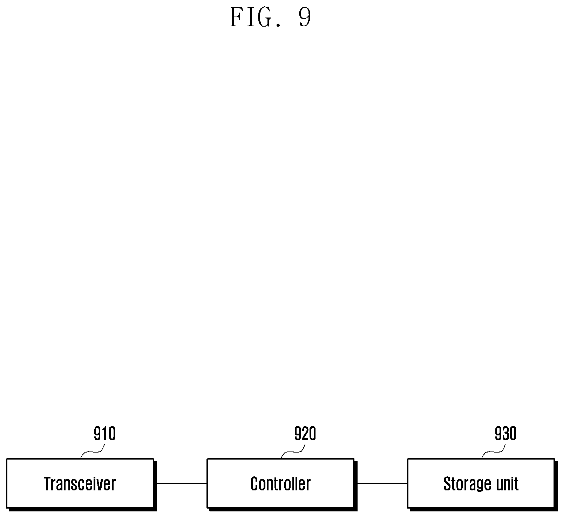

FIG. 8 is a block diagram schematically illustrating a structure of a UE according to an embodiment of the disclosure, and FIG. 9 is a block diagram schematically illustrating a structure of an AMF according to an embodiment of the disclosure.

Referring to FIG. 8, the UE may include a transceiver 810, a controller 820, and a storage 830. In the disclosure, the controller may be defined as a circuit or an applicationspecific integrated circuit or at least one processor.

The transceiver 810 may transmit/receive signals with other network entities. The controller 820 may control the overall operation of the UE according to the embodiments proposed in the disclosure. For example, the controller 820 may control signal flows between the respective blocks to perform operations according to the above-described flowcharts. The storage 830 may store at least one of information transmitted/received through the transceiver 810 and information generated through the controller 820.

Referring to FIG. 9, the AMF may include a transceiver 910, a controller 920, and a storage 930. In the disclosure, the controller may be defined as a circuit or an applicationspecific integrated circuit or at least one processor.

The transceiver 910 may transmit/receive signals with other network entities. The controller 920 may control the overall operation of the AMF according to the embodiments proposed in the disclosure. For example, the controller 920 may control signal flows between the respective blocks to perform operations according to the above-described flowcharts. The storage 930 may store at least one of information transmitted/received through the transceiver 910 and information generated through the controller 920.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely particular examples that have been presented to easily explain the technical contents of the disclosure and help understanding of the disclosure, and are not intended to limit the scope of the disclosure. Therefore, the scope of various embodiments of the disclosure should be construed to include, in addition to the embodiments set forth herein, all changes and modifications derived based on the technical idea of various embodiments of the disclosure.

## Claims

1. A method performed by an access and mobility management function (AMF) in a mobile communication system, the method comprising:
receiving, from a terminal via a second access network (AN), a registration request message using non-3rd generation partnership project (N3GPP) access , the registration request message including information on a multi-access (MA) protocol data unit (PDU) session configured based on a 3rd generation partnership project (3GPP) access via a radio access network (RAN) and the N3GPP access via a first AN, and information on an N3GPP path switching of the MA PDU session;
determining whether an AMF reallocation for the N3GPP path switching is necessary based on the registration request message;
in case that the AMF reallocation is necessary, identifying a target AMF using the information on the N3GPP path switching; and
in case that the target AMF is identified, routing the registration request message to the identified target AMF.

2. The method of claim 1, wherein the determining whether the AMF reallocation is necessary comprises:
identifying network slice selection assistance information (NSSAI) allowed for the terminal; and
determining whether a tracking area identifier (TAI) for the second AN supports the allowed NSSAI, and
wherein, in case that the TAI for the second AN does not support the allowed NSSAI, the AMF reallocation is determined to be necessary.

3. The method of claim 2, further comprising:
transmitting, to a network slice selection function (NSSF), a request message for requesting information on the target AMF based on a the AMF relocation being determined to be necessary; and
receiving, from the NSSF, a response message including information on a target AMF list,
wherein the request message includes at least one of an NSSAI requested by the terminal, a subscribed NSSAI, a first NSSAI allowed for the 3GPP access, a second NSSAI allowed for the N3GPP access, or the TAI.

4. The method of claim 1, further comprising:
transmitting, to the terminal, a registration reject message in case that the target AMF is not identified.

5. A method performed by a terminal in a mobile communication system, the method comprising:
transmitting, to an access and mobility management function (AMF) via a second access network (AN), a registration request message using a non-3rd generation partnership project (N3GPP) access, the registration request message including information on a multi-access (MA) protocol data unit (PDU) session configured based on a 3rd generation partnership project (3GPP) access via a radio access network (RAN) and the N3GPP access via a first AN, and information on an N3GPP path switching of the MA PDU session; and
receiving a registration request approval message or a registration request reject message, as a response to the registration request message,
wherein the registration request approval message is received from a target AMF, and
wherein the target AMF is determined based on the information on the N3GPP path switching included in the registration request message.

6. The method of claim 5, wherein the target AMF is reallocated based on a tracking area identifier (TAI) for the second AN not supporting a network slice selection assistance information (NSSAI) allowed for the terminal.

7. The method of claim 6, wherein the target AMF is included in a target AMF list, the target AMF list being identified based on at least one of an NSSAI requested by the terminal, a subscribed NSSAI, a first NSSAI allowed for the 3GPP access, a second NSSAI allowed for the N3GPP access, or the TAI.

8. The method of claim 5, wherein the registration reject message is received from the AMF.

9. An access and mobility management function (AMF) in a mobile communication system, the AMF comprising:
a transceiver; and
a controller configured to:
control the transceiver to receive, from a terminal via a second access network (AN), a registration request message using non-3rd generation partnership project (N3GPP) access , the registration request message including information on a multi-access (MA) protocol data unit (PDU) session configured based on a 3rd generation partnership project (3GPP) access via a radio access network (RAN) and the N3GPP access via a first AN, and information on an N3GPP path switching of the MA PDU session,
determine whether an AMF reallocation for the N3GPP path switching is necessary based on the registration request message,
in case that the AMF reallocation is necessary, identify a target AMF using the information on the N3GPP path switching, and
in case that the target AMF is identified, control the transceiver to route the registration request message to the identified target AMF.

10. The AMF of claim 9, wherein the controller is further configured to:
identify network slice selection assistance information (NSSAI) allowed for the terminal;
determine whether a tracking area identifier (TAI) for the second AN supports the allowed NSSAI; and
in case that the TAI for the second AN does not support the allowed NSSAI, determine that the AMF reallocation is necessary.

11. The AMF of claim 10, wherein the controller is further configured to:
control the transceiver to transmit, to a network slice selection function (NSSF), a request message for requesting information on the target AMF based on a the AMF relocation being determined to be necessary; and
control the transceiver to receive, from the NSSF, a response message including information on a target AMF list,
wherein the request message includes at least one of an NSSAI requested by the terminal, a subscribed NSSAI, a first NSSAI allowed for the 3GPP access, a second NSSAI allowed for the N3GPP access, or the TAI.

12. The AMF of claim 9, wherein the controller is configured to control the transceiver to transmit a registration reject message to the terminal, in case that the target AMF is not identified.

13. A terminal in a mobile communication system, the terminal comprising:
a transceiver; and
a controller configured to:
control the transceiver to transmit, to an access and mobility management function (AMF) via a second access network (AN), a registration request message using a non-3rd generation partnership project (N3GPP) access, the registration request message including information on a multi-access (MA) protocol data unit (PDU) session configured based on a 3rd generation partnership project (3GPP) access via a radio access network (RAN) and the N3GPP access via a first AN, and information on an N3GPP path switching of the MA PDU session, and
control the transceiver to receive a registration request approval message or a registration request reject message, as a response to the registration request message,
wherein the registration request approval message is received from a target AMF,
wherein the registration reject message is received from the AMF, and
wherein the target AMF is determined based on the information on the N3GPP path switching included in the registration request message.

14. The terminal of claim 13, wherein the target AMF is reallocated based on a tracking area identifier (TAI) for the second AN not supporting a network slice selection assistance information (NSSAI) allowed for the terminal.

15. The terminal of claim 14, wherein the target AMF is included in a target AMF list, the target AMF list being identified based on at least one of an NSSAI requested by the terminal, a subscribed NSSAI, a first NSSAI allowed for the 3GPP access, a second NSSAI allowed for the N3GPP access, or the TAI.
